# DEMANDE DE BREVET EUROPEEN

(11) **EP 4 625 460 A1**
(43) Date de publication de la demande: **01.10.2025**
(21) Numéro de dépôt: 25166739.0
(22) Date de dépôt: 27.03.2025
(51) Int. Cl.: H01H 9/16, H01H 71/02

(54) **UNITÉ DE CONTRÔLE POUR UN DISJONCTEUR ÉLECTRIQUE ET DISJONCTEUR ÉLECTRIQUE ASSOCIÉ**

(30) Priorité: 28.03.2024 FR 2403188
(71) Demandeur: SCHNEIDER ELECTRIC INDUSTRIES SAS, 92500 Rueil-Malmaison (FR)
(72) Inventeur: BIANCHI, Thomas, 38100 Grenoble (FR); PRIEUR, Patrick, 38640 Claix (FR)
(74) Mandataire: Lavoix

(57) **Abrégé**

Cette unité de contrôle (20) comprend un boitier (30) définissant un plan avant (P22), où débouche un logement (401) configuré pour recevoir un module de communication (400) en position assemblée. Des plages de contact (36) sont agencées au fond du logement en retrait du plan avant (P22), de sorte qu'une distance dans l'air entre chaque plage de contact et le plan avant est supérieure à une distance d'isolement de classe 2, selon la norme IEC947-1:2019, sous une tension supérieure à 690 V. Le module de communication comprend une enveloppe (410), qui délimite une cavité (411) configurée pour recevoir une carte de communication (414) sans fil et qui, dans une position assemblée au boitier, obture le logement, de sorte qu'une distance de ligne de fuite chaque plage de contact et le plan avant est supérieure à une distance d'isolement de classe 2 sous une tension supérieure à 690 V selon la norme IEC947-1:2019.

## Description

La présente invention concerne une unité de contrôle d'un disjoncteur électrique, ainsi qu'un disjoncteur électrique comportant une telle unité de contrôle.

La présente invention concerne une unité de contrôle d'un disjoncteur électrique, ainsi qu'un disjoncteur électrique comportant une telle unité de contrôle.

On connaît, notamment de EP-0 843 332-A1, des disjoncteurs électriques comportant une unité de coupure et une unité de contrôle électronique. Une telle unité de contrôle est typiquement configurée pour mesurer en temps réel un état de fonctionnement du disjoncteur et pour commander l'ouverture de l'unité de coupure en cas d'un défaut de fonctionnement du disjoncteur. L'unité de contrôle est reçue, de manière réversible, dans un réceptacle ménagé dans l'unité de coupure et est située sur une face avant du disjoncteur, de manière qu'un utilisateur puisse y lire et/ou régler certains paramètres de fonctionnement du disjoncteur électrique. L'unité de contrôle est amovible, de sorte qu'un utilisateur puisse remplacer l'unité de contrôle en cas de disfonctionnement, sans avoir à déconnecter l'unité de coupure du reste de l'installation électrique.

Selon les applications, le disjoncteur électrique opère sous des tensions de plusieurs centaines voire milliers de Volts, et sous des courants allant jusqu'à plusieurs milliers d'Ampères. Le disjoncteur électrique en général, et l'unité de contrôle en particulier, doivent présenter un isolement électrique suffisante pour garantir la sécurité des personnes. Par exemple, la norme IEC 947-1:2019 - tableaux 13 et 15 - définit des classes d'isolement, qui correspondent à des distances minimales à respecter entre les points électrisés - ou susceptibles d'être électrisés - et l'utilisateur. Les distances d'isolement dépendent notamment de la classe d'isolement recherchée, et de la tension électrique sous laquelle le disjoncteur électrique opère. La norme IEC 947-1:2019 considère principalement deux intervalles de tension électrique, avec un premier intervalle correspondant à une tension inférieure ou égale à 690 V, et un deuxième intervalle correspondant à une tension strictement supérieure à 690 V. À titre d'illustration, pour une tension supérieure à 690 V, la classe 1 d'isolement impose une distance dans l'air supérieure à 7 mm, et des lignes de fuites supérieures à 10 mm. En anglais, la distance dans l'air est appelée « *clearance distance »,* tandis que la distance de ligne de fuite est appelée « *creepage distance ».* La classe 2 d'isolation double ces distances. Pour une tension inférieure à 690 V, la classe 2 d'isolation demande une distance dans l'air supérieure à 10 mm. EP-3 290 935-A1 décrit un exemple d'unité de contrôle pour un disjoncteur électrique respectant les distances d'isolement.

Avec l'évolution des technologies et des besoins, il est avantageux de proposer, au besoin, une interface de communication, en particulier une interface de communication sans fil, pour que l'utilisateur puisse transférer des données depuis et/ou vers l'unité de contrôle.

Or les interface de communication sans fil exigent la présente d'une antenne, qui doit être placée sur l'avant du disjoncteur électrique pour fonctionner de manière satisfaisante. Il est connu de connecter à l'unité de contrôle un module de communication externe, qui comprend un boitier recevant l'antenne, et un câble de connexion, qui est branché à l'unité de contrôle par l'arrière, tandis que le boitier est fixé sur la face avant du disjoncteur. Une telle solution est peu pratique, car elle demande de retirer l'unité de contrôle de son réceptacle pour effectuer le branchement. De plus, le boitier fixé sur le disjoncteur est encombrant et risque d'être endommagé.

C'est à ces besoins qu'entend plus particulièrement remédier l'invention, en proposant une unité de contrôle modulaire, qui permette, au besoin, la mise en place d'un module de communication, sans avoir à extraire l'unité de contrôle du réceptacle ménagé dans l'unité de contrôle, tout en garantissant la protection des personnes.

À cet effet, l'invention concerne une unité de contrôle pour un disjoncteur électrique, l'unité de contrôle comprenant :
- une face avant, qui présente une forme globalement plane et qui est géométriquement portée par un plan avant, la face avant étant orthogonale à un axe de profondeur et définissant une direction avant orientée vers l'utilisateur lorsque l'unité de contrôle est dans une configuration normale d'utilisation,
- un boitier, qui est réalisé en un matériau isolant et qui délimite un logement, le logement étant ménagé en retrait du plan avant et débouchant sur la face avant,
- une carte électronique, qui comprend au moins une zone de connexion avec plusieurs plages de contacts électriques juxtaposées, la zone de connexion étant située dans le logement,
- un module de communication, qui comprend une enveloppe délimitant une cavité, la cavité étant configurée pour recevoir une carte de communication sans fil comprenant une antenne et des connecteurs complémentaires, l'enveloppe étant réalisée en un matériau électriquement isolant et étant configurée être reçue de manière réversible dans le logement, l'enveloppe du module de communication étant dans une position assemblée,
dans laquelle :
- chaque plage de contact est située en retrait du plan avant et est éloigné du plan avant d'une distance, mesurée selon l'axe de profondeur, supérieure à un premier seuil prédéterminé,
- le premier seuil est choisi de sorte qu'une distance dans l'air entre chaque plage de contact et le plan avant est supérieure à une distance d'isolement de classe 2 sous une tension supérieure à 690 V, la distance dans l'air et la distance d'isolement de classe 2 étant selon la norme IEC947-1:2019, et
- lorsque l'enveloppe est en position assemblée, l'enveloppe obture au moins en partie le logement, de sorte qu'une distance de ligne de fuite chaque plage de contact et le plan avant est supérieure à un deuxième seuil prédéterminé, le deuxième seuil étant égal à une distance d'isolement de classe 2 sous une tension supérieure à 690 V selon la norme IEC947-1:2019.

Grâce à l'invention, le module de communication peut être facilement installé par l'avant de l'unité de contrôle, sans avoir à démonter l'unité de contrôle de l'unité de coupure. Les plages de contacts électriques sont tous disposés en retrait de la face avant, ce qui garantit une distance d'isolement suffisante lorsque l'enveloppe du module de communication est montée sur le boitier de l'unité de contrôle, que la carte de communication soit présente ou non. Ainsi, une fois installé, le module de communication n'augmente pas l'encombrement de l'unité de contrôle, qui reste ainsi compacte.

Selon des aspects avantageux mais non obligatoires de l'invention, une telle unité de contrôle peut incorporer une ou plusieurs des caractéristiques suivantes prises isolément ou selon toute combinaison techniquement admissible :
- Le premier seuil est supérieur ou égal à 14 mm.
- Chaque enveloppe comprend une paroi proximale, qui est globalement orthogonale à un axe principal, et une paroi périphérique, qui s'étend en saillie depuis la paroi proximale et qui présente un contour continu autour de l'axe principal, la paroi proximale et la paroi périphérique délimitant ensemble la cavité de l'enveloppe, la cavité débouchant de l'enveloppe par une embouchure distale, qui est situé à l'opposé de la paroi proximale selon l'axe principal,
   alors que, lorsque le module de communication est en configuration assemblée, l'axe principal est parallèle à l'axe de profondeur, tandis que l'embouchure distale est orientée vers la zone de connexion correspondante, la cavité masquant les plages de contact selon l'axe de profondeur.
- Le deuxième seuil est égal à 20 mm.
- Le module de communication comprend la carte de communication, qui est reçue dans la cavité.
- Le module de communication comprend au moins un contact complémentaire, qui est réalisé en métal, qui est partiellement reçu dans la cavité et qui dépasse à l'extérieur de l'enveloppe par l'embouchure distale,
   alors que chaque contact complémentaire est configuré pour être connecté, de manière réversible, à une plage de contact électrique respective du logement lorsque le module de communication est en configuration assemblée.

L'invention concerne aussi un disjoncteur électrique, qui comprend :
- une unité de coupure, comprenant au moins un dispositif de coupure et un actionneur, le dispositif de coupure étant déclenchable au moyen l'actionneur,
- un exemplaire de l'unité de contrôle telle que décrite précédemment,
dans lequel :
- l'unité de coupure ménage un réceptacle, qui débouche sur une face frontale de l'unité de coupure,
- l'unité de contrôle est reçue dans le réceptacle de l'unité de coupure, de sorte que la face avant de l'unité de contrôle est sensiblement alignée avec la face frontale de l'unité de coupure.

### Avantageusement :

- l'unité de coupure comprend un plastron, qui est démontable du reste l'unité de coupure, qui est réalisé en un matériau électriquement isolant et qui définit une portion de la face frontale de l'unité de coupure,
- le logement de communication est un logement frontalier, qui est agencé en bordure de la face avant, tandis que le module de communication présente un renfoncement, qui est situé en retrait du plan avant,
- lorsque l'unité de contrôle est reçue dans le réceptacle et que le plastron est monté sur l'unité de coupure, le plastron recouvre au moins en partie le renfoncement, de manière à empêcher le démontage du module de communication du reste de l'unité de contrôle.

L'invention sera mieux comprise, et d'autres avantages de celle-ci apparaîtront plus clairement à la lumière de la description qui va suivre, d'un mode de réalisation d'une unité de contrôle et d'un disjoncteur électrique, conformes à son principe, donnée uniquement à titre d'exemple et faite en référence aux dessins annexés, dans lesquels :
- [Fig 1] la figure 1 représente respectivement, sur deux inserts a) et b), une vue en perspective et une vue en perspective partiellement éclatée d'un disjoncteur électrique conforme à l'invention, le disjoncteur électrique comprenant une unité de contrôle, elle aussi conforme à l'invention ;
- [Fig 2] la figure 2 est une vue en perspective de l'unité de contrôle de la figure 1 ;
- [Fig 3] la figure 3 représente, sur deux inserts a) et b), une vue en perspective partiellement éclatée de l'unité de contrôle de la figure 1, observée sous deux angles de vue différents ;
- [Fig 4] la figure 4 représente, sur deux inserts a) et b), une coupe de l'unité de contrôle de la figure 1, représentée dans deux autres configurations ;
- [Fig 5] la figure 5 représente respectivement, sur deux inserts a) et b), une vue en perspective et une coupe du disjoncteur électrique de la figure 1, certaines pièces étant cachées.

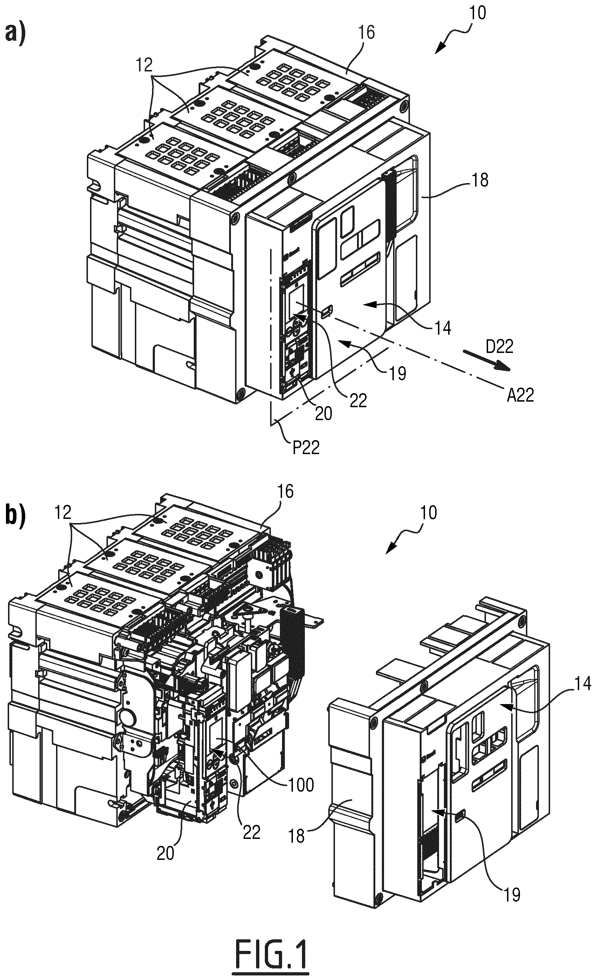

Un disjoncteur électrique 10 est représenté en figure 1. Le disjoncteur électrique 10, dit aussi simplement disjoncteur 10, est ici un disjoncteur multipolaire, en particulier un disjoncteur tripolaire. Le nombre de pôle n'est pas limitatif. De façon connue, un disjoncteur électrique multipolaire comporte, pour chaque pôle électrique, des terminaux de puissance d'entrée et de sortie, qui sont respectivement raccordés ou isolées électriquement l'un de l'autre par un dispositif de coupure du disjoncteur. Le dispositif de coupure comprend par exemple des contacts mobiles séparables, qui sont reçus dans une chambre de coupure du disjoncteur électrique 10 et qui dont les mouvements sont contrôlés par un actionneur. Ainsi, le dispositif de coupure est déclenchable par l'actionneur. Les chambres de coupures sont ici matérialisées par trois grilles 12 visibles sur une face supérieure du disjoncteur 10, les autres éléments du dispositif de coupure n'étant pas représenté.

Le disjoncteur électrique 10 est destiné à être utilisé au sein d'une installation électrique, par exemple pour contrôler l'alimentation d'une machine-outil. Dans une configuration normale d'utilisation, le disjoncteur électrique 10 est généralement placé au sein d'une armoire électrique, le disjoncteur électrique 10 présentant une face frontale 14, qui est orientée vers l'utilisateur se tenant devant l'armoire électrique. L'armoire électrique n'est pas représentée.

Le disjoncteur électrique 10 comprend une unité de coupure 16, qui comporte en particulier chacune des chambres de coupures, ainsi que le dispositif de coupure et l'actionneur associé.

Le disjoncteur électrique 10 comprend avantageusement un plastron 18, qui est démontable du reste l'unité de coupure 16. Le plastron 18 est réalisé en un matériau électriquement isolant et s'étend globalement selon un plan frontal P14, qui définit une portion de la face frontale 14 du disjoncteur électrique 10, et par extension de l'unité de coupure 16. Le plastron 18 sert ainsi à protéger l'utilisateur du disjoncteur 10. À la figure 1 a), le plastron 18 est représenté assemblé à l'unité de coupure 16, ce qui correspond à une configuration d'utilisation normale du disjoncteur 10. À la figure 1 b), le plastron 18 est éloigné de l'unité de coupure 16, cette configuration se retrouvant par exemple lors d'une maintenance de l'unité de coupure 16.

Le disjoncteur électrique 10 comprend aussi une unité de contrôle 20. L'unité de contrôle 10 est configurée pour analyser des états de l'unité de coupure 16 et est configurée pour déclencher l'actionneur en fonction des résultats de ces analyses, séparant ainsi les contacts séparables.

L'unité de contrôle 20 comprenant une face avant 22, La face avant 22 présente une forme globalement plane et est géométriquement portée par un plan avant P22, qui est orthogonal à un axe de profondeur A22 de l'unité de contrôle 20. La face avant 22 est orientée vers l'utilisateur lorsque l'unité de contrôle 20 est dans une configuration normale d'utilisation. La face avant 22 définit ainsi une direction avant D22, qui est parallèle à l'axe de profondeur A22. La direction avant D22 est représentée par une flèche. Les notions de directions telles que « avant », « arrière », « haut », « bas », etc., sont définies en relation aux éléments tels que représentés sur les dessins, sachant qu'il peut en être autrement dans la réalité.

Le plastron 18 comprend une fenêtre 19, par laquelle la face avant 22 de l'unité de coupure 20 est visible. La fenêtre 19 est préférentiellement obturée par un rabat transparent. Le rabat n'est pas représenté.

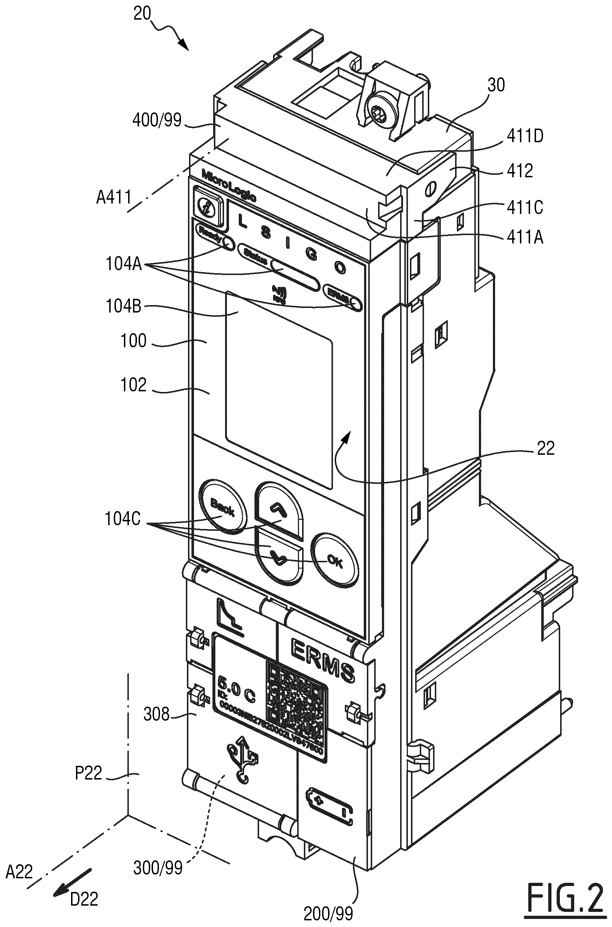

L'unité de contrôle 10 est assemblé à l'unité de coupure 16 de manière réversible. Dans l'exemple des figures 1a) et 1b), l'unité de contrôle 20 est représentée en configuration assemblée à l'unité de coupure 16. L'unité de contrôle 20 est représentée isolément à la figure 2.

L'unité de coupure 16 ménage un réceptacle, qui débouche sur une face frontale 14 de l'unité de coupure 16 et dans lequel est reçue l'unité de contrôle 20, de sorte que la face avant 22 de l'unité de contrôle 20 est sensiblement alignée avec la face frontale 14 de l'unité de coupure 16, comme notamment illustré à la figure 1 a). Le réceptacle n'est pas représenté.

On décrit à présent l'unité de contrôle 20, en référence aux figures 2 à 4.

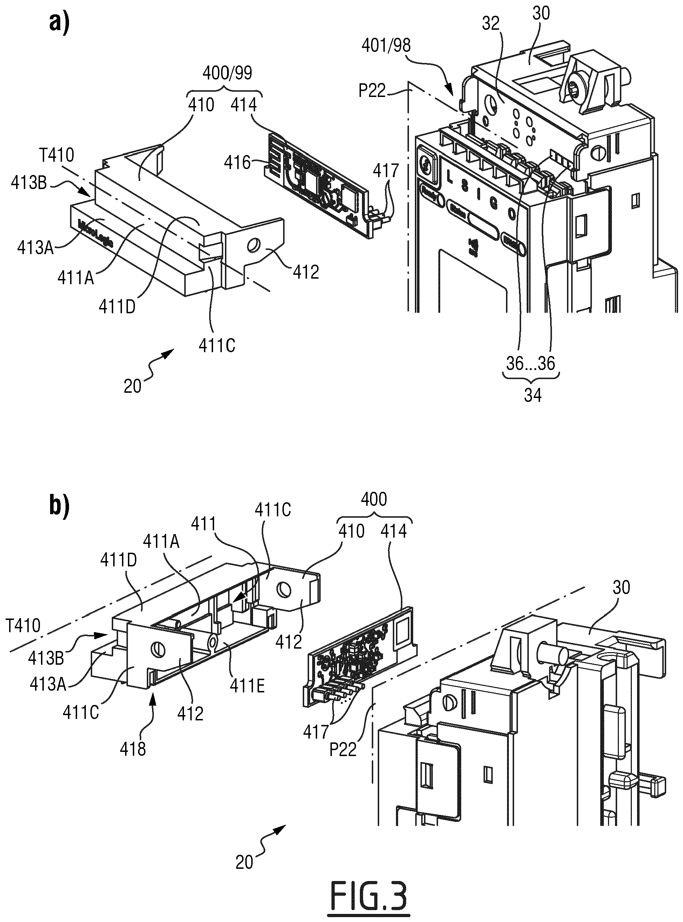

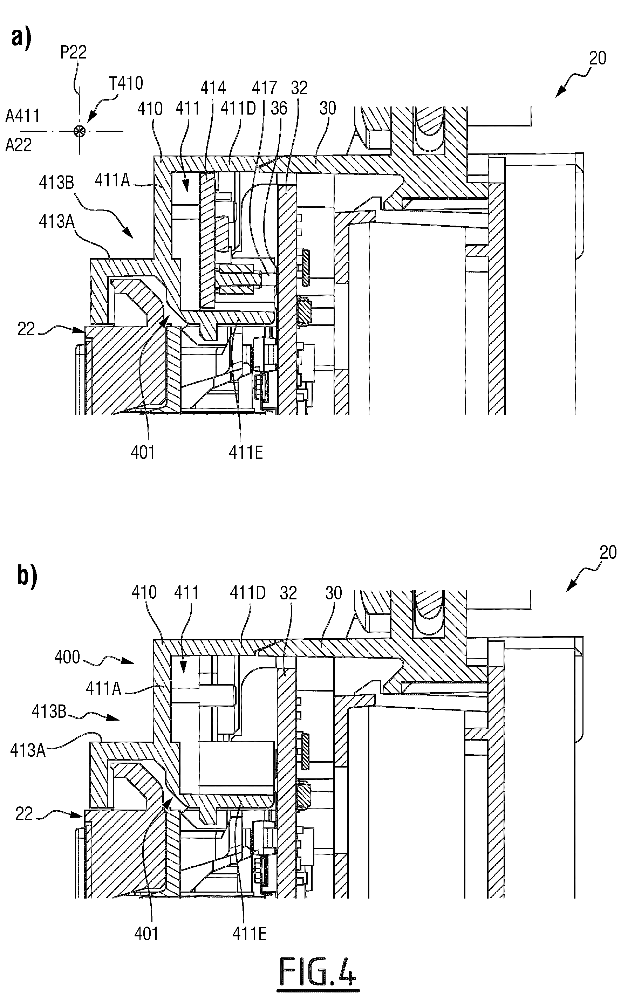

L'unité de contrôle 20 comprend un boitier 30, qui est réalisé en un matériau isolant et qui forme un volume de réception de divers composants de l'unité de contrôle 10. Le boitier 30 loge en particulier une carte électronique 32, qui est partiellement visible sur les figures 3 et 4. La carte électronique 32 comprend en particulier un circuit imprimé et plusieurs composants électroniques tels qu'un microprocesseur, etc.

Dans l'exemple illustré, la carte électronique 32 comprend plusieurs portions, qui sont ici reliées les unes aux autres par des bus de communication. Les bus de communication ne sont pas représentés. Optionnellement, une ou plusieurs potions de la carte électronique 32 sont flexibles. Alternativement, la carte électronique 32 inclut plusieurs portions qui ne sont pas reliées les uns aux autres par des bus de communication.

Le boitier 30 inclut ici un sous-ensemble avant 100. Par extension, le sous-ensemble 100 appartient à l'unité de contrôle 20. Le sous-ensemble avant 100 comprend une portion centrale 102, qui est ici configurée pour recevoir au moins un élément d'interface homme-machine 104. Une interface homme machine est aussi désignée par son acronyme IHM, ou MHI en anglais. Les éléments d'interface homme machine 104 sont aussi notés simplement « éléments IHM » 104. Dans l'exemple illustré, la portion centrale 102 comprend plusieurs éléments IHM 104. Les éléments IHM 104 incluent ici trois voyants lumineux 104A, une portion transparente 104B, au travers de laquelle un écran peut être observé, et quatre boutons 104C. Ces exemples ne sont pas limitatifs, le type, le nombre et l'agencement des éléments IHM 104 pouvant être changés lors de la conception du sous-ensemble avant 100.

Le sous-ensemble avant 100 est avantageusement assemblé au reste de l'unité de contrôle 20, en particulier au boitier 30, de manière réversible. Il est ainsi possible de remplacer le sous-ensemble avant 100 en cas de dysfonctionnement. La portion centrale 102 forme ainsi une portion de la face avant 22 de l'unité de contrôle 120.

Le boitier 30 comprend au moins un logement 98, ici trois logements, chaque logement étant ménagé en retrait du plan avant P22 et débouchant sur la face avant 22.

L'unité de contrôle 20 comprend aussi au moins un module fonctionnel 99, ici trois modules fonctionnels 99, chaque logement étant associé à un module fonctionnel respectif. Chaque module fonctionnel 99 est ainsi configuré pour être reçu de manière réversible dans le logement associé, le module fonctionnel 99 considéré étant dans une configuration assemblée.

De préférence, l'unité de contrôle 20 comprend plusieurs modules fonctionnels 99, Dans l'exemple illustré, l'unité de contrôle 20 comprend trois modules fonctionnels 99, qui sont différents les uns des autres et qui incluent un premier module 200, qui est ici un module de batterie, un deuxième module 300, qui est ici un module de connexion filaire, et un troisième module 400, qui est ici un module de communication sans fil. Le deuxième module fonctionnel 300 est ici caché par un couvercle 308. Chaque module fonctionnel 99 est associé à un logement 98 respectif. Chaque module fonctionnel 99 est configuré pour être reçu de manière réversible dans le logement 98 associé, le module fonctionnel 99 étant alors dans une configuration assemblée. Dans l'exemple illustré, chaque module fonctionnel 99 est configuré pour être inséré dans le logement 98 correspondant selon un mouvement d'insertion, qui est un mouvement de translation parallèle à l'axe de profondeur A22 et orienté selon une direction arrière, c'est-à-dire selon une direction opposée à la direction avant D22.

On s'intéresse ici au troisième module 400 de communication, l'invention pouvant bien entendu être mise en œuvre en l'absence des autres modules fonctionnels. Le troisième module 400 de communication est aussi appelé simplement « module de communication 400 ». Le logement 98 associé au troisième module 400 de communication est aussi appelé logement de communication 401.

Le boitier 30 délimite le logement de communication 401, qui est ménagé en retrait du plan avant P22 et qui débouchant sur la face avant 24. Autrement dit, le logement de communication 401 est ouvert selon la direction avant D22. Dans l'exemple illustré, le logement de communication 401 est agencé sur une bordure de la face avant 24, c'est-à-dire que le logement de communication 401 est aussi ouvert selon une direction radiale à la direction avant D22. Dans l'exemple illustré, le logement de communication 401 est ouvert vers le haut de l'unité de contrôle 20. Le logement de communication 401 est ainsi dit « logement frontalier ».

La carte électronique 32 comprend une zone de connexion 34, qui comprend plusieurs plages de contacts 36 électriques juxtaposées. La zone de connexion 34 comprend ici cinq plages de contact 36 alignées. La zone de connexion 34 est située dans le logement de connexion 401, la carte électronique 32 formant ici un fond du logement de connexion 401.

Chaque plage de contact 36 comprend un élément conducteur sensiblement plat situé en surface de la carte électronique 32, chaque plage de contact 36 étant propre à être électriquement connectée à un connecteur complémentaire 417 respectif appartenant au module de communication 400, chaque connecteur complémentaire 417 venant en appui sur la plage de contact 36 correspondante. Les connecteurs complémentaires 417 sont détaillés plus loin. Avantageusement, les plages de contact 36 font partie du circuit imprimé de la carte électronique 32, autrement dit sont fabriqués en même temps que la carte électronique 32.

Chaque plage de contact 36 de la zone de connexion 34 est située en retrait du plan avant P22 et est éloignée du plan avant P22 d'une distance, mesurée selon l'axe de profondeur, supérieure à un premier seuil S1 prédéterminé. Le premier seuil S1 est choisi de sorte qu'une distance dans l'air entre chaque plage de contact 36 et le plan avant P22 est supérieure à une distance d'isolement de classe 2 sous une tension supérieure à 690 V, la distance dans l'air et la distance d'isolement de classe 2 étant selon la norme IEC 947-1:2019. De manière schématique, la distance dans l'air entre deux points est le plus court chemin entre ces deux points, tout en contournant les éventuels obstacles.

De préférence, le premier seuil S1 est supérieur ou égal à 14 mm.

On décrit à présent le module de communication 400.

Le module de communication 400 est configuré pour être reçu dans le logement de communication 401 dans une position assemblée du module de communication 400, l'unité de contrôle 20 étant alors dans une configuration assemblée. Le module de communication 400 comprend un corps 410, qui est réalisé en un matériau électriquement isolant.

Le corps 410 est représenté isolément en figure 3, et en configuration assemblée en figure 2. En référence à la figure 9 où le corps 410 est visible en coupe, le corps 410 comprend une portion principale délimitant une cavité 411, qui est ouverte selon une direction arrière du corps 410, la direction arrière étant opposée à la direction avant D22 lorsque le module de communication 400 est assemblé au boitier 30. Optionnellement, le module de communication 400 comprend aussi avantageusement une carte de communication 414, qui est configurée pour être reçue dans la cavité 411. La carte de communication 414 comprend avantageusement une antenne 416, et plusieurs exemplaires des contacts complémentaires 417. Les contacts complémentaires 417 sont ici des broches 417, de préférence des broches télescopiques - dites aussi *« pogo-pin »* en anglais -, chaque broche 417 étant configurée pour être connectée à une plage de contact 36 respective selon un mouvement comprenant une composante de translation.

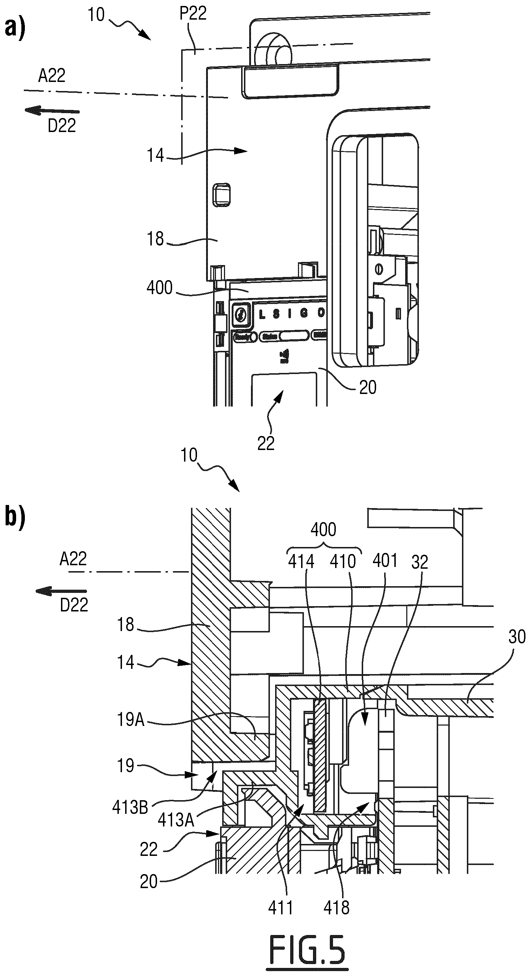

Le corps 410 présente ici une forme allongée et s'étend parallèlement un axe transversal T410 du corps 410, comme illustré en figure 5. Lorsque le corps 410 est assemblé au boitier 30, l'axe transversal T410 est parallèle à un axe transversal du boitier 30, et par extension de l'unité de contrôle 20, l'axe transversal étant parallèle au plan avant P22.

Le corps 410 présente, en coupe selon un plan orthogonal à l'axe transversal T410, autrement dit en coupe transversale, une section sensiblement constante. Le corps 410 comprend une paroi proximale 411A, qui est située du côté de l'utilisateur lorsque le module de connexion 300 est en position assemblée, deux parois latérales 411C, qui s'étendent orthogonalement à l'axe transversal T410 et qui sont reliées l'une à l'autre par la paroi proximale 411A. Le corps 410 comprend aussi une paroi supérieure 411D et une paroi inférieure 411E, qui sont parallèles l'une à l'autre et qui sont reliées l'une à l'autre, d'une part, par la paroi proximale 411A et, d'autre part, par les parois latérales 411D. La paroi proximale 411A est ici plane et globalement orthogonale à un axe principal A411. Lorsque le module de communication 400 est en configuration assemblée au boitier 30, l'axe principal A411 est parallèle à l'axe de profondeur A22. La paroi proximale 411A, les parois latérales 411C, la paroi supérieure 411D et la paroi inférieure 411E forment ensemble une enveloppe qui délimite la cavité 411. Les parois latérales 411C, la paroi supérieure 411D et la paroi inférieure 411E forment ensemble une paroi périphérique de l'enveloppe, la paroi périphérique s'étendant en saillie depuis la paroi proximale 411A. La cavité 411 débouche de l'enveloppe du module de communication 400 par une embouchure distale 418, qui est situé à l'opposé de la paroi proximale selon l'axe principal A411.

Avantageusement, la paroi périphérique présente un contour continu autour de l'axe principal A411.

Lorsque le module de communication est en configuration assemblée, l'embouchure distale 418 est orientée vers la zone de connexion 34, la cavité 411 masquant les plages de contact 36 selon l'axe de profondeur A22, tandis qu'une distance de lignes de fuites depuis chaque plage de contact 36 jusqu'au plan avant P22 est supérieure à un deuxième seuil S2 prédéterminé, le deuxième seuil S2 étant supérieur au premier seuil S1. De préférence, le deuxième seuil S2 est supérieur à une distance d'isolement de classe 2 tel que défini dans la norme IEC947-1:2019. De préférence, le deuxième seuil S2 est égal à 20 mm.

Le corps 410 comprend aussi des moyens d'attache 412 pour maintenir le module de communication 400 dans la position assemblée. Les moyens d'attache 412 sont ici deux clips élastiques, qui s'étendent ici vers l'arrière depuis chacune des faces latérales 411C. Les moyens d'attaches 412 sont avantageusement réversibles, de sorte qu'un utilisateur puisse extraire le module de communication 400 du logement de communication 401, par exemple pour replacer le module de communication 400 en cas de mauvais fonctionnement.

Avantageusement, la paroi proximale 411A est située en retrait du plan avant P22, tandis que le corps 410 comprend aussi une saillie 413A, qui s'étend depuis la paroi proximale 411A selon la direction avant D22, la paroi proximale 411A et la saillie délimitant ensemble un renfoncement 413B du corps 410, et par extension du troisième module 400 de communication. Le renfoncement 413B est ainsi situé en retrait du plan avant.

La saillie 413A présente ici, en coupe transversale, un profil continu en forme de L. La saille 413A est situé à distance d'une arête de jonction entre la paroi proximale 411A et la paroi supérieure 411D, de sorte que le renfoncement 413B est ouvert à la fois vers l'avant et vers le haut de l'unité de contrôle 20 lorsque le corps 410 est en position assemblée sur le boitier 30.

Lorsque l'unité de contrôle 20 est reçue dans le réceptacle de l'unité de coupure 16 et que le plastron 18 est monté sur l'unité de coupure, le plastron recouvre 18 le renfoncement 413B, de manière à empêcher le démontage du module de communication, du reste de l'unité de contrôle 20, comme illustré en figure 5. Plus précisément, un bord 19A de la fenêtre 19 du plastron 18 coopère avec le renfoncement 413B, de manière à limiter les déplacements du corps 410 par rapport au boitier 30 de l'unité de contrôle 20, en particulier les mouvements de translation vers l'avant ou vers le haut. Le module de communication 400 est ainsi maintenu assemblé au boitier 30.

On comprend ainsi que lorsque l'unité de contrôle 20 est reçue dans le réceptacle de l'unité de coupure 16, tant que le plastron 18 est assemblé à l'unité de coupure 16, le plastron empêche à la fois le démontage du module de communication 400 de l'unité de contrôle 20, et le démontage de l'unité de contrôle 20 de l'unité de coupure 16.

Les contacts complémentaires 417 sont ici des broches 417, de préférence des broches télescopiques - dites aussi « pogo-pin » en anglais -, chaque broche 417 étant configurée pour être connectée à une plage de contact 36 respective selon un mouvement de translation. Avantageusement, lorsque la carte de communication 414 est reçue dans la cavité 411, seuls les contacts complémentaires 417 dépassent de la cavité 411, à l'extérieur de l'enveloppe, par l'embouchure distale 418. Les broches 417 télescopiques permettent d'accommoder les jeux dimensionnels lorsque le module de communication 400 est en position assemblée.

Lorsque la carte de communication 414 est reçue dans la cavité 411, l'antenne 416 est avantageusement située en regard de la paroi proximale 411A, de manière à favoriser la transmission des ondes électromagnétiques émises ou reçues par l'antenne 416.

Lorsque le module de communication 400 est reçu dans le logement de communication 401 correspondant, l'enveloppe obture au moins en partie le logement de communication 401 associé, de sorte qu'une distance de ligne de fuite chaque plage de contact 36 et le plan avant P22 est supérieure à une distance d'isolement de classe 2 sous une tension supérieure à 690 V, la distance de ligne de fuite étant selon la norme IEC 947-1:2019. La distance d'isolement de classe 2 est obtenue à la fois lorsque la carte de communication 414 est présente et à la fois lorsque la carte de communication est absente. Il est ainsi possible d'ajouter la carte de communication, selon les besoins de l'utilisateur, à une unité de contrôle 20 qui en serait initialement dépourvue, et ce même après la mise en service de l'unité de contrôle 20 et du disjoncteur 10, sans changer le niveau de sécurité du disjoncteur 10.

En particulier, lorsque l'enveloppe du module de communication 400 est en position assemblée, la paroi inférieure 411E s'étend en direction de la carte électronique 32, une extrémité de la paroi inférieure 411E étant située en regard de la carte électronique.

Les modes de réalisation et les variantes mentionnées ci-dessus peuvent être combinés entre eux pour générer de nouveaux modes de réalisation de l'invention.

## Revendications

1. Unité de contrôle (20) pour un disjoncteur électrique (10), l'unité de contrôle (20) comprenant :
- une face avant (22), qui présente une forme globalement plane et qui est géométriquement portée par un plan avant (P22), la face avant (22) étant orthogonale à un axe de profondeur (A22) et définissant une direction avant (D22) orientée vers l'utilisateur lorsque l'unité de contrôle (20) est dans une configuration normale d'utilisation,
- un boitier (30), qui est réalisé en un matériau isolant et qui délimite un logement (401), le logement (401) étant ménagé en retrait du plan avant (P22) et débouchant sur la face avant (22),
- une carte électronique (32), qui comprend au moins une zone de connexion (34) avec plusieurs plages de contacts (36) électriques juxtaposées, la zone de connexion (34) étant située dans le logement (401),
- un module de communication (400), qui comprend une enveloppe délimitant une cavité (411), la cavité (411) étant configurée pour recevoir une carte de communication (414) sans fil comprenant une antenne (416) et des connecteurs complémentaires (417), l'enveloppe étant réalisée en un matériau électriquement isolant et étant configurée être reçue de manière réversible dans le logement (401), l'enveloppe du module de communication (400) étant dans une position assemblée,
dans laquelle:
- chaque plage de contact (36) est située en retrait du plan avant (P22) et est éloigné du plan avant (P22) d'une distance, mesurée selon l'axe de profondeur (A22), supérieure à un premier seuil (S1) prédéterminé,
- le premier seuil (S1) est choisi de sorte qu'une distance dans l'air entre chaque plage de contact (36) et le plan avant (P22) est supérieure à une distance d'isolement de classe 2 sous une tension supérieure à 690 V, la distance dans l'air et la distance d'isolement de classe 2 étant selon la norme IEC947-1:2019, et
- lorsque l'enveloppe est en position assemblée, l'enveloppe obture au moins en partie le logement (401), de sorte qu'une distance de ligne de fuite chaque plage de contact (36) et le plan avant (P22) est supérieure à un deuxième seuil prédéterminé, le deuxième seuil étant égal à une distance d'isolement de classe 2 sous une tension supérieure à 690 V selon la norme IEC947-1:2019.

2. Unité de contrôle (20) selon la revendication 1, dans laquelle :
- le premier seuil (S1) est supérieur ou égal à 14 mm.

3. Unité de contrôle (20) selon l'une quelconque des revendications 1 ou 2, dans laquelle :
- chaque enveloppe comprend une paroi proximale (411A), qui est globalement orthogonale à un axe principal (A411), et une paroi périphérique, qui s'étend en saillie depuis la paroi proximale (411A) et qui présente un contour continu autour de l'axe principal (A411), la paroi proximale (411A) et la paroi périphérique délimitant ensemble la cavité (411) de l'enveloppe, la cavité (411) débouchant de l'enveloppe par une embouchure distale (418), qui est situé à l'opposé de la paroi proximale (411A) selon l'axe principal (A411),
- lorsque le module de communication (400) est en configuration assemblée, l'axe principal (A411) est parallèle à l'axe de profondeur (A22), tandis que l'embouchure distale (418) est orientée vers la zone de connexion (34) correspondante, la cavité (411) masquant les plages de contact selon l'axe de profondeur (A22).

4. Unité de contrôle (20) selon l'une quelconque des revendications 1 à 3, dans laquelle :
- le deuxième seuil est égal à 20 mm.

5. Unité de contrôle (20) selon l'une quelconque des revendications 1 à 4, dans laquelle :
- le module de communication (400) comprend la carte de communication (414), qui est reçue dans la cavité (411).

6. Unité de contrôle (20) selon la revendication 5, dans laquelle :
- le module de communication (400) comprend au moins un contact complémentaire (417), qui est réalisé en métal, qui est partiellement reçu dans la cavité (411) et qui dépasse à l'extérieur de l'enveloppe par l'embouchure distale (418),
- chaque contact complémentaire (417) est configuré pour être connecté, de manière réversible, à une plage de contact (36) électrique respective du logement (401) lorsque le module de communication (400) est en configuration assemblée.

7. Disjoncteur électrique (10), comprenant :
- une unité de coupure (16), comprenant au moins un dispositif de coupure et un actionneur, le dispositif de coupure étant déclenchable au moyen l'actionneur,
- un exemplaire de l'unité de contrôle (20) selon l'une quelconque des revendications 1 à 6,
dans lequel :
- l'unité de coupure (16) ménage un réceptacle, qui débouche sur une face frontale (14) de l'unité de coupure,
- l'unité de contrôle (20) est reçue dans le réceptacle de l'unité de coupure, de sorte que la face avant (22) de l'unité de contrôle (20) est sensiblement alignée avec la face frontale de l'unité de coupure.

8. Disjoncteur électrique (10) selon la revendication 7, dans lequel :
- l'unité de coupure (16) comprend un plastron (18), qui est démontable du reste l'unité de coupure, qui est réalisé en un matériau électriquement isolant et qui définit une portion de la face frontale (14) de l'unité de coupure (16),
- le logement (401) de communication est un logement (401) frontalier, qui est agencé en bordure de la face avant (22), tandis que le module de communication (400) présente un renfoncement (413B), qui est situé en retrait du plan avant (P22),
- lorsque l'unité de contrôle (20) est reçue dans le réceptacle et que le plastron (18) est monté sur l'unité de coupure (16), le plastron recouvre au moins en partie le renfoncement (413B), de manière à empêcher le démontage du module de communication (400) du reste de l'unité de contrôle (20).

## Revendications modifiées

### Revendications modifiées conformément à la règle 137(2) CBE.

1. Unité de contrôle (20) pour un disjoncteur électrique (10), l'unité de contrôle (20) comprenant :
- une face avant (22), qui présente une forme globalement plane et qui est géométriquement portée par un plan avant (P22), la face avant (22) étant orthogonale à un axe de profondeur (A22) et définissant une direction avant (D22) orientée vers l'utilisateur lorsque l'unité de contrôle (20) est dans une configuration normale d'utilisation,
- un boitier (30), qui est réalisé en un matériau isolant et qui délimite un logement (401), le logement (401) étant ménagé en retrait du plan avant (P22) et débouchant sur la face avant (22),
- une carte électronique (32), qui comprend au moins une zone de connexion (34) avec plusieurs plages de contacts (36) électriques juxtaposées, la zone de connexion (34) étant située dans le logement (401),
- un module de communication (400), qui comprend une enveloppe délimitant une cavité (411), la cavité (411) étant configurée pour recevoir une carte de communication (414) sans fil comprenant une antenne (416) et des connecteurs complémentaires (417), l'enveloppe étant réalisée en un matériau électriquement isolant et étant configurée être reçue de manière réversible dans le logement (401), l'enveloppe du module de communication (400) étant dans une position assemblée,
dans laquelle:
- chaque plage de contact (36) est située en retrait du plan avant (P22) et est éloigné du plan avant (P22) d'une distance, mesurée selon l'axe de profondeur (A22), supérieure à un premier seuil (S1) prédéterminé,
- le premier seuil (S1) est choisi de sorte qu'une distance dans l'air entre chaque plage de contact (36) et le plan avant (P22) est supérieure à 14 mm, ce qui correspond à une distance d'isolement de classe 2 sous une tension supérieure à 690 V, la distance dans l'air et la distance d'isolement de classe 2 étant selon la norme IEC947-1:2019, et
- lorsque l'enveloppe est en position assemblée, l'enveloppe obture au moins en partie le logement (401), de sorte qu'une distance de ligne de fuite chaque plage de contact (36) et le plan avant (P22) est supérieure à un deuxième seuil prédéterminé, le deuxième seuil étant égal à 20 mm. ce qui correspond à une distance d'isolement de classe 2 sous une tension supérieure à 690 V selon la norme IEC947-1:2019.

2. Unité de contrôle (20) selon la revendication 1, dans laquelle :
- le premier seuil (S1) est supérieur ou égal à 14 mm.

3. Unité de contrôle (20) selon l'une quelconque des revendications 1 ou 2, dans laquelle :
- chaque enveloppe comprend une paroi proximale (411A), qui est globalement orthogonale à un axe principal (A411), et une paroi périphérique, qui s'étend en saillie depuis la paroi proximale (411A) et qui présente un contour continu autour de l'axe principal (A411), la paroi proximale (411A) et la paroi périphérique délimitant ensemble la cavité (411) de l'enveloppe, la cavité (411) débouchant de l'enveloppe par une embouchure distale (418), qui est situé à l'opposé de la paroi proximale (411A) selon l'axe principal (A411),
- lorsque le module de communication (400) est en configuration assemblée, l'axe principal (A411) est parallèle à l'axe de profondeur (A22), tandis que l'embouchure distale (418) est orientée vers la zone de connexion (34) correspondante, la cavité (411) masquant les plages de contact selon l'axe de profondeur (A22).

4. Unité de contrôle (20) selon l'une quelconque des revendications 1 à 3, dans laquelle :
- le deuxième seuil est égal à 20 mm.

5. Unité de contrôle (20) selon l'une quelconque des revendications 1 à 4, dans laquelle :
- le module de communication (400) comprend la carte de communication (414), qui est reçue dans la cavité (411).

6. Unité de contrôle (20) selon la revendication 5, dans laquelle :
- le module de communication (400) comprend au moins un contact complémentaire (417), qui est réalisé en métal, qui est partiellement reçu dans la cavité (411) et qui dépasse à l'extérieur de l'enveloppe par l'embouchure distale (418),
- chaque contact complémentaire (417) est configuré pour être connecté, de manière réversible, à une plage de contact (36) électrique respective du logement (401) lorsque le module de communication (400) est en configuration assemblée.

7. Disjoncteur électrique (10), comprenant :
- une unité de coupure (16), comprenant au moins un dispositif de coupure et un actionneur, le dispositif de coupure étant déclenchable au moyen l'actionneur,
- un exemplaire de l'unité de contrôle (20) selon l'une quelconque des revendications 1 à 6,
dans lequel :
- l'unité de coupure (16) ménage un réceptacle, qui débouche sur une face frontale (14) de l'unité de coupure,
- l'unité de contrôle (20) est reçue dans le réceptacle de l'unité de coupure, de sorte que la face avant (22) de l'unité de contrôle (20) est sensiblement alignée avec la face frontale de l'unité de coupure.

8. Disjoncteur électrique (10) selon la revendication 7, dans lequel :
- l'unité de coupure (16) comprend un plastron (18), qui est démontable du reste l'unité de coupure, qui est réalisé en un matériau électriquement isolant et qui définit une portion de la face frontale (14) de l'unité de coupure (16),
- le logement (401) de communication est un logement (401) frontalier, qui est agencé en bordure de la face avant (22), tandis que le module de communication (400) présente un renfoncement (413B), qui est situé en retrait du plan avant (P22),
- lorsque l'unité de contrôle (20) est reçue dans le réceptacle et que le plastron (18) est monté sur l'unité de coupure (16), le plastron recouvre au moins en partie le renfoncement (413B), de manière à empêcher le démontage du module de communication (400) du reste de l'unité de contrôle (20).
